# FASCICULE DE BREVET EUROPEEN

(11) **EP 2 303 693 B1**
(45) Date de publication et mention de la délivrance du brevet: **31.10.2012**
(21) Numéro de dépôt: 09797550.2
(22) Date de dépôt: 10.04.2009
(51) Int. Cl.: B64D 29/06

(54) **DISPOSITIF DE CAPOTAGE DE NACELLE D'UNITE DE PUISSANCE PROPULSIVE D'AERONEF**
VERKLEIDUNGSVORRICHTUNG FÜR DIE GONDEL EINER FLUGZEUGANTRIEBSSTROMEINHEIT
FAIRING DEVICE FOR NACELLE OF AN AIRCRAFT PROPULSION POWER UNIT

(30) Priorité: 25.06.2008 FR 0803554
(43) Date de publication de la demande: 06.04.2011
(73) Titulaire: Snecma, 75015 Paris (FR)
(72) Inventeur: REGARD, Sébastien, F-94700 Maisons Alfort (FR)
(74) Mandataire: Gevers France
(86) Numéro de dépôt international: PCT/FR2009/000423
(87) Numéro de publication internationale: WO 2010/007218

(56) Documents cités:
- FR-A- 2 830 842
- FR-A- 2 855 497
- GB-A- 2 202 588
- US-A- 3 347 578

## Description

L'invention concerne le domaine des unités de puissance propulsive montées sur le fuselage d'un aéronef, et en particulier les dispositifs de capotage enveloppant les moteurs à turbine à gaz.

Une unité de puissance propulsive comporte généralement un moteur à turbine à gaz, une nacelle entourant le moteur, et une structure de support de la nacelle. La nacelle comprend, dans le sens de l'écoulement des gaz, une structure d'entrée d'air, et au moins un dispositif de capotage.

Dans le cas des petits avions, les unités de puissance propulsive sont généralement montées à l'arrière du fuselage d'un aéronef, en position haute. Dans ce cas, la structure de support, encore appelée pylône, est fixée par une première extrémité à la nacelle. La deuxième extrémité du pylône est fixée à partir d'un emplacement arrière du fuselage de l'aéronef

Le dispositif de capotage de la nacelle comporte souvent deux capots ouvrants, un capot supérieur et un capot inférieur, tel que décrits dans les brevets US 3,347,578 et US 4,585,189. Ces deux capots ouvrants sont montés sur le pylône de manière à pouvoir pivoter autour d'un axe d'articulation longitudinal, parallèle à l'axe moteur, par l'intermédiaire d'un système de pivotement, situé à la jonction du pylône avec la nacelle.

Cependant, compte tenu de l'emplacement du système de pivotement, les capots n'englobent pas le volume formé par le pylône lui-même.

Or, à l'intérieur du pylône, il est souvent prévu d'installer des équipements, tels qu'échangeur air / air et vannes de régulation. De ce fait, l'accès à l'intérieur de celui-ci est nécessaire pour la maintenance de ces équipements. Pour cet accès, une technologie consiste à positionner, sur la surface du pylône, des trappes amovibles au droit des emplacements des équipements. Ces trappes sont généralement réalisées à l'aide de panneaux rivetés, vissés sur le pylône. Cependant, cette technologie nécessite un temps d'accès important aux équipements situés dans le pylône.

Une autre technologie consiste à placer des capots additionnels pour le pylône, pouvant pivoter autour d'un axe d'articulation latéral, perpendiculaire à l'axe moteur, par l'intermédiaire d'un système de pivotement, situé à la limite de la zone accueillant les équipements et de celle ne possédant pas d'équipements. Cette technologie facilite la maintenance par un temps d'accès plus rapide, mais présente l'inconvénient d'être plus lourde et plus complexe à mettre en oeuvre.

L'invention a pour objet d'améliorer les dispositifs de capotage de l'art antérieur et de permettre un accès facile et rapide aux équipements installés dans le pylône, sans alourdir celui-ci.

Pour cela, l'invention a pour objet un dispositif de capotage apte à être monté en correspondance une unité de puissance propulsive comportant un moteur à turbine à gaz, une nacelle, dont fait partie ledit dispositif de capotage, et qui entoure le moteur, et une structure de support dite pylône de maintien à un fuselage d'un aéronef, ledit pylône s'étendant dans un plan de symétrie sensiblement horizontal contenant l'axe longitudinal de l'unité de puissance propulsive, et comportant un compartiment central ouvert par en dessus et par en dessous, et prévu pour loger des équipements, ledit pylône étant destiné à être rattaché au fuselage par un bord distal s'étendant parallèlement à l'axe longitudinal de l'unité de puissance propulsive, le dispositif de capotage étant constitué d'au moins un demi-capot supérieur et d'un demi-capot inférieur sensiblement symétriques par rapport audit plan de symétrie, et verrouillables entre eux, en position fermée, à leur point de concours par un moyen de verrouillage. Au moins un desdits demi-capots supérieur et inférieur est monté pivotant individuellement sur ledit bord distal du pylône de manière à, en position ouverte, donner accès à la fois au moteur et au compartiment central du pylône.

Le demi-capot supérieur peut comprendre une première partie sensiblement plane, par laquelle il est monté pivotant sur le bord latéral distal du pylône, et destinée à obturer le dessus du compartiment central du pylône, et une seconde partie de forme semi-cylindrique appartenant à la nacelle.

Dans une forme de réalisation possible, ladite seconde partie du demi-capot supérieur est formée d'au moins deux portions articulées l'une avec l'autre autour d'un axe s'étendant parallèlement à l'axe longitudinal de l'unité de puissance propulsive, une première desdites portions étant réalisée d'un seul tenant avec ladite première partie du demi-capot supérieur.

Selon une possibilité, le dispositif de capotage d'unité de puissance propulsive comporte au moins un moyen de maintien en position ouverte du demi-capot supérieur.

Ledit moyen de maintien peut être un bras monté pivotant par une première extrémité sur ladite première partie du demi-capot supérieur et dont une seconde extrémité est apte à venir en appui contre le pylône de manière à immobiliser le demi-capot supérieur en position ouverte.

Avantageusement, en position ouverte, le centre de gravité de la deuxième portion du demi-capot supérieur se situe dans un plan vertical passant par la première extrémité dudit bras de maintien.

Le demi-capot inférieur peut comprendre une première partie sensiblement plane, par laquelle il est monté pivotant sur le bord latéral distal du pylône, et destinée à obturer le dessous du compartiment central du pylône, et une seconde partie de forme semi-cylindrique appartenant à la nacelle.

Dans une forme de réalisation possible, ladite seconde partie du demi-capot inférieur est formée d'au moins deux portions articulées l'une avec l'autre autour d'un axe s'étendant parallèlement à l'axe longitudinal de l'unité de puissance propulsive, une première desdites portions étant réalisée d'un seul tenant avec ladite première partie du demi-capot inférieur.

Selon une possibilité, le dispositif de capotage d'unité de puissance propulsive comporte au moins un moyen de maintien en position ouverte du demi-capot inférieur.

Ledit moyen de maintien peut être un bras monté pivotant par une première extrémité sur ladite première partie du demi-capot inférieur et dont une seconde extrémité est apte à s'accrocher sur le pylône de manière à immobiliser le demi-capot inférieur en position ouverte.

Avantageusement, en position ouverte, le centre de gravité de la deuxième portion du demi-capot inférieur se situe dans un plan vertical passant par la première extrémité dudit bras de maintien.
L'invention et ses avantages seront mieux compris à la lecture de la description détaillée qui suit, d'exemples de réalisation de l'invention donnés à titre illustratif et non limitatif. Cette description fait référence aux figures annexées sur lesquelles :
- la figure 1 est une vue en perspective d'une unité de puissance propulsive attachée au fuselage d'un aéronef, et équipée d'un dispositif de capotage selon l'invention ;
- la figure 2 est une vue de face avant de l'unité de puissance propulsive de la figure 1;

La figure 3 est une vue analogue à la figure 2 d'une unité de puissance propulsive équipée d'un autre dispositif de capotage selon l'invention.

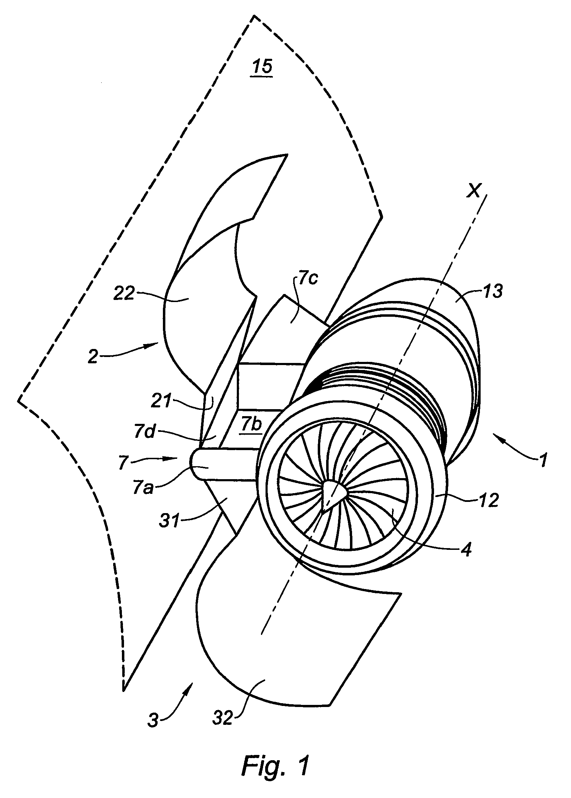

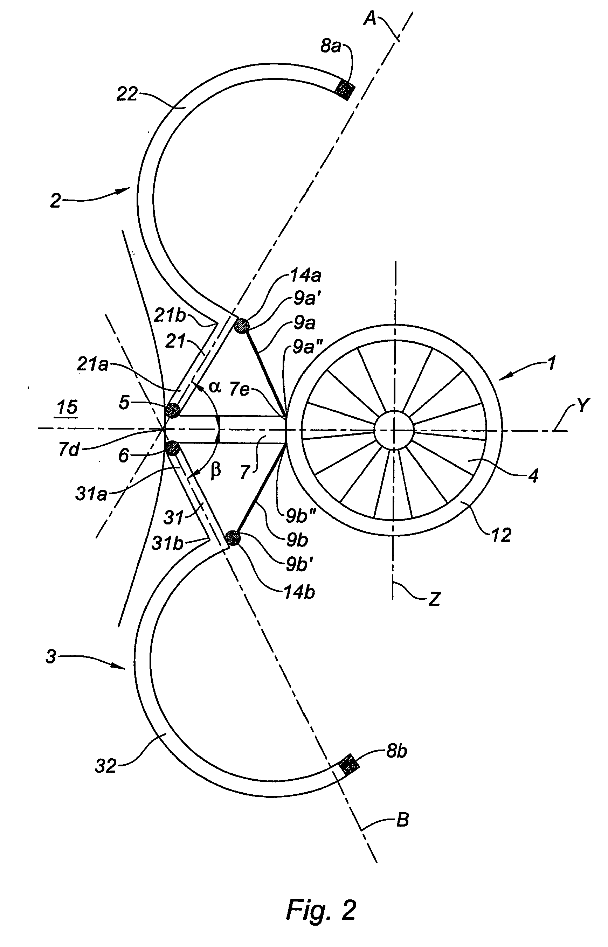

Les figures 1 et 2 représentent des vues respectivement en perspective et de face d'une unité de puissance propulsive 1 fixée à un fuselage 15 d'un aéronef, équipée d'un dispositif de capotage en position ouverte, selon l'invention. L'unité de puissance propulsive 1 comporte un moteur à turbine à gaz 4, une nacelle, dont fait partie le dispositif de capotage et qui entoure le moteur 4, et une structure de support 7, appelée pylône. La nacelle de l'unité de puissance propulsive 1 comporte, dans le sens de l'écoulement de l'air, une structure d'entrée d'air 12, le dispositif de capotage, et un inverseur de poussée 13. Le pylône 7 s'étend dans un plan de symétrie sensiblement horizontal contenant l'axe longitudinal X de l'unité de puissance propulsive, et comporte un compartiment central 7b ouvert par en dessus et par en dessous, et prévu pour loger des équipements, non représentés. Le pylône 7 est rattaché au fuselage 15 par un bord distal 7d s'étendant parallèlement à l'axe longitudinal de l'unité de puissance propulsive 1, le bord proximal 7e étant rattaché à la nacelle. Le dispositif de capotage est constitué d'un demi-capot supérieur 2 et d'un demi-capot inférieur 3 sensiblement symétriques par rapport audit plan de symétrie contenant l'axe longitudinal X.

Le demi-capot 2 comprend une première partie 21, sensiblement plane, par laquelle il est monté pivotant, par l'intermédiaire d'un dispositif de pivotement 5, fixé à partir d'une première extrémité 21a, sur le bord latéral distal 7d du pylône 7, destinée à obturer le dessus du compartiment central 7b, et une seconde partie 22, de forme semi-cylindrique, fixée à partir d'une première extrémité sur une deuxième extrémité 21b, destinée à compléter la partie supérieure de la nacelle.

De la même façon, le demi-capot 3 comprend une première partie 31, sensiblement plane, par laquelle il est monté pivotant, par l'intermédiaire d'un dispositif de pivotement 6, à partir d'une première extrémité 31a, sur le bord latéral distal 7d du pylône 7, destinée à obturer le dessous du compartiment central 7b, et une seconde partie 32, de forme semi-cylindrique, fixée à partir d'une première extrémité sur une deuxième extrémité 31b, destinée à compléter la partie inférieure de la nacelle.

Le pylône 7 comporte trois volumes, notés 7a, 7b et 7c dans le sens d'écoulement des gaz. Un volume 7a, de forme aérodynamique, ne comprend pas d'équipements. Le volume 7b, de forme parallélépipédique, est accessible et comporte des équipements, non représentés. Un volume 7c, situé à l'arrière ne comprend pas d'équipements. Les trois axes X, axial, Y, radial et Z tangentiel situent les axes de l'unité de puissance propulsive 1.

Sur la figure 2, la ligne A est comprise dans un plan correspondant sensiblement à la surface de la première partie 21 du demi-capot 2. La ligne B est compris dans un plan correspondant sensiblement à la surface de la première partie 31 du demi-capot 3.

Des bras de maintien 9a et 9b sont fixés respectivement à une première extrémité 9a' et 9b' sous la deuxième extrémité 21b de la première partie 21 du demi-capot 2 et sous la deuxième extrémité 31b de la première partie 31 du demi-capot 3, par des dispositifs de rotation 14a et 14b. Ces bras de maintien 9a et 9b permettent de maintenir en position ouverte les demi-capots respectivement 2 et 3.

En position demi-capots 2 et 3 fermés, les bras de maintien respectivement 9a et 9b sont escamotés et bloqués, repliés, à partir des dispositifs de rotation 14a et 14b, sous les premières parties 21 et 31 des demi-capots 2 et 3. En position ouverte, les bras de maintien 9a et 9b sont fixés, d'une part à partir des dispositifs de rotation 14a et 14b et d'autre part par leur extrémité 9a" et 9b" au bord proximal 7e du pylône 7.

Demi-capot 2 ouvert, un angle formé par la ligne A et l'axe radial moteur Y, indiqué a, est de préférence supérieur à 55°. De même, un angle formé par la ligne B et l'axe radial moteur Y, indiqué β est également de préférence supérieur à 55°. Ces valeurs d'angle éloignent suffisamment le dispositif de capotage, permettant un accès aisé au compartiment central 7b et au moteur 4.

Les deux demi-capots 2 et 3 sont verrouillés entre eux en position fermée à leur point de concours par un verrou 8a placé sur une deuxième extrémité de la partie 22 du demi-capot supérieur 2 et 8b placé sur une deuxième extrémité de la partie 32 du demi-capot inférieur 3. Les demi-capots supérieur 2 et inférieur 3 sont montés pivotant individuellement sur le bord distal 7d du pylône 7 de manière à, en position ouverte, donner accès à la fois au moteur 4 et au compartiment central 7b du pylône 7.

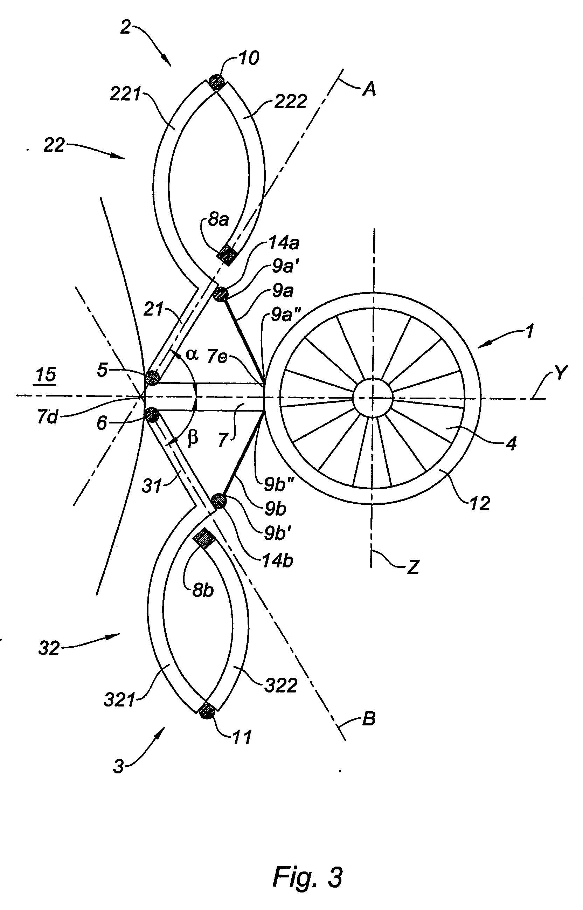

Dans la variante illustrée figure 3, le demi-capot supérieur 2 comprend la première partie 21, la deuxième partie 22 étant réalisée en deux portions. Une première portion 221 de forme partiellement semi-cylindrique, est fixée à partir de la deuxième extrémité 21b de la première partie 21. Une charnière 10 est fixée sur la deuxième extrémité de la première portion 221. La deuxième portion 222 est également de forme partiellement semi-cylindrique. Une première extrémité de la deuxième portion 222 est fixée à la charnière 10, permettant ainsi, en position fermée, de compléter la partie supérieure de la nacelle. Le verrou 8a est fixé à une deuxième extrémité de la portion 222.

De la même façon, le demi-capot inférieur 3 comprend une première partie 31, la deuxième partie 32 étant réalisée en deux portions. Une première portion 321 de forme partiellement semi-cylindrique, est fixée à partir de la deuxième extrémité 31b de la première partie 31. Une charnière 11 est fixée sur la deuxième extrémité de la première portion 321. La deuxième portion 322 est également de forme partiellement semi-cylindrique. Une première extrémité de la deuxième portion 322 est fixée à la charnière 11, permettant ainsi, en position fermée, de compléter la partie inférieure de la nacelle. Le verrou 8b est fixé à une deuxième extrémité de la portion 322.

Les portions 221 et 222 présentent des dimensions sensiblement identiques, compte tenu de la position de la charnière 10. Compte tenu de la longueur du bras de maintien 9a, le demi-capot supérieur 2 ouvert, le centre de gravité de la deuxième portion 222 se situe sur une verticale passant par le dispositif de rotation 14a. Dans cette configuration, la deuxième portion 222 vient se caler par son propre poids le long de la première portion 221.

La dimension de la première portion 321 est sensiblement double de celle de la deuxième portion 322, compte tenu de la position de la charnière 11. Compte tenu de la longueur du bras de maintien 9b, demi-capot inférieur 3 ouvert, le centre de gravité de la deuxième portion 322 se situe sur une verticale passant par le dispositif de rotation 14b. Dans cette configuration, la deuxième portion 322 vient se caler par son propre poids, vers l'intérieur de la forme semi-cylindrique de la première portion 321.

L'emplacement des charnières 10 et 11 pourrait être différent, impliquant des dimensions respectives des portions 221 et 222 d'une part et 321 et 322 d'autre part, différentes.

La cinématique d'ouverture des demi-capots 2 et 3 peut être manuelle ou automatique, chaque demi-capot pouvant être ouvert indépendamment l'un de l'autre ou non.

Dans une autre configuration, non représentée, les dispositifs de rotation 14a et 14b pourraient être situés à l'extrémité proximale 7e du pylône 7. Dans ce cas, une deuxième extrémité respectivement 9a" et 9b" des bras de maintien 9a et 9b est fixée, en position dispositif de capotage ouvert, dans une zone aménagée pour ce blocage, respectivement sous la jonction des pièces 210 et 221 du demi-capot 2, et sous la jonction des pièces 310 et 321 du demi-capot 3. En position dispositif de capotage fermé, les bras de maintien 9a et 9b sont escamotés et bloqués, repliés, à partir des charnières 14a et 14b, sous les premières parties 21 et 22 respectivement des demi-capots 2 et 3.

Dans encore une autre configuration, non représentée, les bras de maintien 9a et 9b pourraient également être rapportés à chaque manoeuvre d'ouverture du dispositif de capotage.

## Revendications

1. Dispositif de capotage apte à être monté en correspondance d'une unité de puissance propulsive (1), ladite unité propulsive (1) comportant un moteur à turbine à gaz (4), une nacelle, dont fait partie ledit dispositif de capotage, et qui entoure le moteur, et une structure de support dite pylône (7) de maintien à un fuselage (15) d'un aéronef, ledit pylône s'étendant dans un plan de symétrie sensiblement horizontal contenant l'axe longitudinal (X) de l'unité de puissance propulsive, et comportant un compartiment central (7b) ouvert par en dessus et par en dessous, et prévu pour loger des équipements, ledit pylône (7) étant destiné à être rattaché au fuselage (15) par un bord distal (7d) s'étendant parallèlement à l'axe longitudinal (X) de l'unité de puissance propulsive, le dispositif de capotage étant constitué d'au moins un demi-capot supérieur (2) et d'un demi-capot inférieur (3) sensiblement symétriques par rapport audit plan de symétrie, et verrouillables entre eux, en position'fermée, à leur point de concours par un moyen de verrouillage (8a, 8b), **caractérisé en ce que** au moins un desdits demi-capots supérieur (2) et inférieur (3) est apte à être monté pivotant individuellement sur ledit bord distal (7d) du pylône (7) de manière à, en position montée et ouverte, donner accès à la fois au moteur (4) et au compartiment central (7b) du pylône (7).

2. Dispositif de capotage apte à être monté en correspondance d'unité de puissance propulsive (1) selon la revendication 1, **caractérisé en ce que** le demi-capot supérieur (2) comprend une première partie (21) sensiblement plane, par laquelle il est apte à être monté pivotant sur le bord latéral distal (7d) du pylône (7), et destinée à obturer le dessus du compartiment central (7b) du pylône (7), et une seconde partie (22) de forme semi-cylindrique appartenant à la nacelle.

3. Dispositif de capotage apte à être monté en correspondance d'unité de puissance propulsive (1) selon la revendication 2, **caractérisé en ce que** la seconde partie (22) du demi-capot supérieur (2) est formée d'au moins deux portions (221, 222) articulées l'une avec l'autre autour d'un axe s'étendant en position montée parallèlement à l'axe longitudinal de l'unité de puissance propulsive (1), une première (221) desdites portions étant réalisée d'un seul tenant avec ladite première partie (21) du demi-capot supérieur (2).

4. Dispositif de capotage apte à être monté en correspondance d'unité de puissance propulsive (1) selon l'une quelconque des revendications 1 à 3, **caractérisé en ce qu'**il comporte au moins un moyen de maintien en position ouverte du demi-capot supérieur (2).

5. Dispositif de capotage apte à être monté en correspondance d'unité de puissance propulsive (1) selon la revendication 4 et la revendication 2 ou 3, **caractérisé en ce que** ledit moyen de maintien est un bras (9a) monté pivotant par une première extrémité (9a') sur ladite première partie (21) du demi-capot supérieur (2) et dont une seconde extrémité (9a'') est apte à venir en appui contre le pylône (7) de manière à immobiliser le demi-capot supérieur (2) en position ouverte.

6. Dispositif de capotage apte à être monté en correspondance d'unité de puissance propulsive (1) selon les revendications 3 et 5, **caractérisé en ce que**, en position ouverte, le centre de gravité de la deuxième portion (222) du demi-capot supérieur (2) se situe dans un plan vertical passant par la première extrémité (9a') dudit bras (9a) de maintien.

7. Dispositif de capotage apte à être monté en correspondance d'unité de puissance propulsive (1) selon l'une quelconque des revendications 1 à 6, **caractérisé en ce que** le demi-capot inférieur (3) comprend une première partie (31) sensiblement plane par laquelle il est monté pivotant sur le bord latéral distal (7d) du pylône (7), et destinée à obturer le dessous du compartiment central (7b) du pylône (7), et une seconde partie (32) de forme semi-cylindrique appartenant à la nacelle.

8. Dispositif de capotage apte à être monté en correspondance d'unité de puissance propulsive (1) selon la revendication 7, **caractérisé en ce que** la seconde partie (32) du demi-capot (3) est formée d'au moins deux portions (321, 322) articulées l'une avec l'autre autour d'un axe s'étendant parallèlement à l'axe longitudinal de l'unité de puissance propulsive (1), une première (321) desdites portions étant réalisée d'un seul tenant avec ladite première partie (31) du demi-capot inférieur.

9. Dispositif de capotage apte à être monté en correspondance d'unité de puissance propulsive (1) selon l'une quelconque des revendications 7 à 8, **caractérisé en ce qu'**il comporte au moins un moyen (9b) de maintien en position ouverte du demi-capot inférieur (3).

10. Dispositif de capotage apte à être monté en correspondance d'unité de puissance propulsive (1) selon la revendication 9 et la revendication 7 ou 8, **caractérisé en ce que** ledit moyen de maintien est un bras (9b) monté pivotant par une première extrémité (9b') sur ladite première partie (31) du demi-capot inférieur (3), et dont une seconde extrémité (9b") est apte à s'accrocher sur le pylône (7) de manière à immobiliser le demi-capot inférieur (3) en position ouverte.

11. Dispositif de capotage apte à être monté en correspondance d'unité de puissance propulsive (1) selon les revendications 8 et 10, **caractérisé en ce que**, en position ouverte le centre de gravité de la deuxième portion (322) du demi-capot inférieur (3) se situe dans un plan vertical passant par ladite première extrémité (9b') dudit bras (9b) de maintien.

12. Unité de puissance propulsive (1) comportant un dispositif de capotage selon l'une quelconque des revendications 1 à 11.

## Claims

1. A fairing device capable of being mounted so as to correspond to a propulsion power unit (1), said propulsion power unit (1) comprising a gas turbine engine (4), a nacelle, of which said fairing device forms a part, and which surrounds the engine, and a support structure known as a pylon (7) for securing to a fuselage (15) of an aircraft, said pylon running in a substantially horizontal plane of symmetry containing the longitudinal axis (X) of the propulsion power unit, and comprising a central compartment (7b) open from the top and from the bottom, and designed to house equipment, said pylon (7) being intended to be attached to the fuselage (15) by a distal edge (7d) running parallel to the longitudinal axis (X) of the propulsion power unit, the fairing device consisting of at least an upper half-cowl (2) and a lower half-cowl (3) which are substantially symmetric with respect to said plane of symmetry and can be locked together, in the closed position, at their meeting point by a locking means (8a, 8b), **characterized in that** at least one of said upper (2) and lower (3) half-cowls is capable of being mounted so that it can pivot individually on said distal edge (7d) of the pylon (7) so as, in the mounted and open position, to provide access both to the engine (4) and to the central compartment (7b) of the pylon (7).

2. The fairing device capable of being mounted so as to correspond to a propulsion power unit (1) as claimed in claim 1, **characterized in that** the upper half-cowl (2) comprises a substantially planar first part (21) via which it is capable of being pivot-mounted on the distal lateral edge (7d) of the pylon (7) and intended to close off the top of the central compartment (7b) of the pylon (7) and a second part (22) of semi-cylindrical shape belonging to the nacelle.

3. The fairing device capable of being mounted so as to correspond to a propulsion power unit (1) as claimed in claim 2, **characterized in that** the second part (22) of the upper half-cowl (2) is formed of at least two portions (221, 222) articulated to one another about an axis running, in the mounted position, parallel to the longitudinal axis of the propulsion power unit (1), a first (221) of said portions being made as one piece with said first part (21) of the upper half-cowl (2).

4. The fairing device capable of being mounted so as to correspond to a propulsion power unit (1) as claimed in any one of claims 1 to 3, **characterized in that** it comprises at least one holding means for keeping the upper half-cowl (2) in the open position.

5. The fairing device capable of being mounted so as to correspond to a propulsion power unit (1) as claimed in claim 4 and claim 2 or 3, **characterized in that** said holding means is an arm (9a) pivot-mounted via a first end (9a') on said first part (21) of the upper half-cowl (2) and a second end (9a") of which is able to come to rest against the pylon (7) so as to immobilize the upper half-cowl (2) in the open position.

6. The fairing device capable of being mounted so as to correspond to a propulsion power unit (1) as claimed in claims 3 and 5, **characterized in that**, in the open position, the center of gravity of the second portion (222) of the upper half-cowl (2) lies in a vertical plane passing through the first end (9a') of said holding arm (9a).

7. The fairing device capable of being mounted so as to correspond to a propulsion power unit (1) as claimed in any one of claims 1 to 6, **characterized in that** the lower half-cowl (3) comprises a substantially planar first part (31) via which it is pivot-mounted on the distal lateral edge (7d) of the pylon (7) and intended to close off the underside of the central compartment (7b) of the pylon (7) and a second part (32) of semi-cylindrical shape belonging to the nacelle.

8. The fairing device capable of being mounted so as to correspond to a propulsion power unit (1) as claimed in claim 7, **characterized in that** the second part (32) of the half-cowl (3) is formed of at least two portions (321, 322) articulated to one another about an axis running parallel to the longitudinal axis of the propulsion power unit (1), a first (321) of said portions being made as one piece with said first part (31) of the lower half-cowl.

9. The fairing device capable of being mounted so as to correspond to a propulsion power unit (1) as claimed in any one of claims 7 to 8, **characterized in that** it comprises at least one holding means (9b) for keeping the lower half-cowl (3) in the open position.

10. The fairing device capable of being mounted so as to correspond to a propulsion power unit (1) as claimed in claim 9 and claim 7 or 8, **characterized in that** said holding means is an arm (9b) pivot-mounted via a first end (9b') on said first part (31) of the lower half-cowl (3) and a second end (9b") of which is able to catch on the pylon (7) so as to immobilize the lower half-cowl (3) in the open position.

11. The fairing device capable of being mounted so as to correspond to a propulsion power unit (1) as claimed in claims 8 and 10, **characterized in that**, in the open position, the center of gravity of the second portion (322) of the lower half-cowl (3) lies in a vertical plane passing through said first end (9b') of said holding arm (9b).

12. A propulsion power unit (1) comprising a fairing device as claimed in any one of claims 1 to 11.

## Patentansprüche

1. Verkleidungsvorrichtung, die im Bereich einer Antriebseinheit (1) montierbar ist, wobei die Antriebseinheit (1) einen Gasturbinenmotor (4), eine Gondel, der die Verkleidungsvorrichtung zugehörig ist und die den Motor umgibt, und eine Trägerstruktur des Außenlastträgers (7) zur Halterung an einem Rumpf (15) eines Flugzeugs aufweist, wobei sich der Außenlastträger in einer im Wesentlichen horizontalen Symmetrieebene, welche die Längsachse (X) der Antriebseinheit umfasst, erstreckt und einen mittigen Raum (7b) aufweist, der oben und unten offen ist und für die Unterbringung von Einrichtungen vorgesehen ist, wobei der Außenlastträger (7) dafür bestimmt ist, an dem Rumpf (15) durch einen distalen Rand (7d) befestigt zu werden, der sich parallel zu der Längsachse (X) der Antriebseinheit erstreckt, wobei die Verkleidungsvorrichtung von mindestens einer oberen Haubenhälfte (2) und einer unteren Haubenhälfte (3) gebildet ist, die relativ zu der Symmetrieebene im Wesentlichen symmetrisch sind und, in geschlossener Position, an ihrem Schnittpunkt durch ein Verriegelungsmittel (8a, 8b) untereinander verriegelbar sind, **dadurch gekennzeichnet, dass** mindestens eine der oberen (2) und unteren (3) Haubenhälften an dem distalen Rand (7d) des Außenlastträgers (7) einzeln drehbar montiert werden kann, derart, dass, in der montierten offenen Positionen, Zugang gleichzeitig zu dem Motor (4) und zu dem mittigen Raum (7b) des Außenlastträgers (7) geschaffen wird.

2. Verkleidungsvorrichtung, die im Bereich der Antriebseinheit (1) montierbar ist, nach Anspruch 1, **dadurch gekennzeichnet, dass** die obere Haubenhälfte (2) einen ersten im Wesentlichen ebenen Teil (21) umfasst, durch den sie an dem distalen Seitenrand (7d) des Außenlastträgers (7) drehbar montiert werden kann und der dafür bestimmt ist, die Oberseite des mittigen Raums (7b) des Außenlastträgers (7) zu verschließen, und einen zweiten Teil (22) mit halbkreisförmiger Form umfasst, welcher der Gondel zugehörig ist.

3. Verkleidungsvorrichtung, die im Bereich der Antriebseinheit (1) montierbar ist, nach Anspruch 2, **dadurch gekennzeichnet, dass** der zweite Teil (22) der oberen Haubenhälfte (2) von mindestens zwei Teilen (221, 222) gebildet ist, die um eine Achse, die sich in montierter Position parallel zu der Längsachse der Antriebseinheit (1) erstreckt, herum miteinander angelenkt sind, wobei ein erster (221) der Teile einstückig mit dem ersten Teil (21) der oberen Haubenhälfte (2) hergestellt ist.

4. Verkleidungsvorrichtung, die im Bereich der Antriebseinheit (1) montierbar ist, nach einem der Ansprüche 1 bis 3, **dadurch gekennzeichnet, dass** sie mindestens ein Mittel aufweist, um die obere Haubenhälfte (2) in offener Position zu halten.

5. Verkleidungsvorrichtung, die im Bereich der Antriebseinheit (1) montierbar ist, nach Anspruch 4 und Anspruch 2 oder 3, **dadurch gekennzeichnet, dass** das Haltemittel ein Arm (9a) ist, der durch ein erstes Ende (9a') an dem ersten Teil (21) der oberen Haubenhälfte (2) drehbar montiert ist, und wobei ein zweites Ende (9a") dafür geeignet ist, gegen den Außenlastträgers (7) zur Auflage zu kommen, derart, dass die obere Haubenhälfte (2) in offener Position in der Bewegung gesperrt ist.

6. Verkleidungsvorrichtung, die im Bereich der Antriebseinheit (1) montierbar ist, nach Anspruch 3 und 5, **dadurch gekennzeichnet, dass** sich, in offener Position, der Schwerpunkt des zweiten Teils (222) der oberen Haubenhälfte (2) in einer vertikalen Ebene befindet, die durch das erste Ende (9a') des Haltearms (9a) verläuft.

7. Verkleidungsvorrichtung, die im Bereich der Antriebseinheit (1) montierbar ist, nach einem der Ansprüche 1 bis 6, **dadurch gekennzeichnet, dass** die untere Haubenhälfte (3) einen ersten im Wesentlichen ebenen Teil (31) umfasst, durch den sie an dem distalen Seitenrand (7d) des Außenlastträgers (7) drehbar montiert ist und der dafür bestimmt ist, die Unterseite des mittigen Raums (7b) des Außenlastträgers (7) zu verschließen, und einen zweiten Teil (32) mit halbkreisförmiger Form umfasst, welcher der Gondel zugehörig ist.

8. Verkleidungsvorrichtung der Antriebseinheit (1) nach Anspruch 7, **dadurch gekennzeichnet, dass** der zweite Teil (32) der Haubenhälfte (3) von mindestens zwei Teilen (321, 322) gebildet ist, die um eine Achse, die sich parallel zu der Längsachse der Antriebseinheit (1) erstreckt, herum miteinander angelenkt sind, wobei ein erster (321) der Teile einstückig mit dem ersten Teil (31) der unteren Haubenhälfte hergestellt ist.

9. Verkleidungsvorrichtung, die im Bereich der Antriebseinheit (1) montierbar ist, nach einem der Ansprüche 7 bis 8, **dadurch gekennzeichnet, dass** sie mindestens ein Mittel (9b) aufweist, um die untere Haubenhälfte (3) in offener Position zu halten.

10. Verkleidungsvorrichtung, die im Bereich der Antriebseinheit (1) montierbar ist, nach Anspruch 9 und Anspruch 7 oder 8, **dadurch gekennzeichnet, dass** das Haltemittel ein Arm (9b) ist, der durch ein erstes Ende (9'b) an dem ersten Teil (31) der unteren Haubenhälfte (3) drehbar montiert ist, und wobei ein zweites Ende (9b") dafür geeignet ist, sich an dem Außenlastträger (7) einzuhängen, derart, dass die untere Haubenhälfte (3) in offener Position in der Bewegung gesperrt ist.

11. Verkleidungsvorrichtung, die im Bereich der Antriebseinheit (1) montierbar ist, nach Anspruch 8 und 10, **dadurch gekennzeichnet, dass** sich, in offener Position, der Schwerpunkt des zweiten Teils (322) der unteren Haubenhälfte (3) in einer vertikalen Ebene befindet, die durch das erste Ende (9b') des Haltearms (9b) verläuft.

12. Antriebseinheit (1), die eine Verkleidungsvorrichtung nach einem der Ansprüche 1 bis 11 aufweist.
